(19) Europäisches Patentamt / European Patent Office / Office européen des brevets

(11) **EP 4 042 296 B1**

(12) **EUROPEAN PATENT SPECIFICATION**

(45) Date of publication and mention of the grant of the patent:
**24.06.2026 Bulletin 2026/26**

(21) Application number: **19948417.1**

(22) Date of filing: **07.10.2019**

(51) International Patent Classification (IPC):
**G06N 20/00** (2019.01)  **G06N 3/098** (2023.01)
**G06N 3/006** (2023.01)  **G06N 7/01** (2023.01)
**G06N 3/063** (2023.01)

(52) Cooperative Patent Classification (CPC):
**G06N 3/006; G06N 3/098; G06N 7/01; G06N 20/00; G06N 3/063**

(86) International application number:
**PCT/IN2019/050740**

(87) International publication number:
**WO 2021/070189 (15.04.2021 Gazette 2021/15)**

(54) **MODERATOR FOR FEDERATED LEARNING**

MODERATOR FÜR FÖDERALES LERNEN

MODÉRATEUR POUR APPRENTISSAGE FÉDÉRÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.08.2022 Bulletin 2022/33**

(73) Proprietor: **Telefonaktiebolaget LM Ericsson (publ)**
**164 83 Stockholm (SE)**

(72) Inventors:
• **SATHEESH KUMAR, Perepu**
**Chennai, 600042 (IN)**
• **SHUKLA, Anshu**
**Bangalore 560037 (IN)**
• **MOHALIK, Swarup Kumar**
**Bangalore 560037 (IN)**

(74) Representative: **Ericsson**
**Patent Development**
**Torshamnsgatan 21-23**
**164 80 Stockholm (SE)**

(56) References cited:
**WO-A1-2018/057302    KR-A- 20190 048 004**

• L. MUNOZ-GONZALEZ ET AL.: "Byzantine-Robust Federated Machine Learning through Adaptive Model Averaging", ARXIV.ORG, CORNELL UNIVERSITY LIBRARY, 201 OLIN LIBRARY CORNELL UNIVERSITY ITHACA, NY 14853, 11 September 2019 (2019-09-11), XP081481726
• A. N. BHAGOJI ET AL.: "Analyzing Federated Learning through an Adversarial Lens", ARXIV.ORG, CORNELL UNIVERSITY LIBRARY, 201 OLIN LIBRARY CORNELL UNIVERSITY ITHACA, NY 14853, 29 November 2018 (2018-11-29), XP081124102
• A. KADAV ET AL.: "ASAP: Asynchronous Approximate Data-Parallel Computation", ARXIV.ORG, CORNELL UNIVERSITY LIBRARY, 201 OLIN LIBRARY CORNELL UNIVERSITY ITHACA, NY 14853, 27 December 2016 (2016-12-27), XP080743117
• J. SUBLIME ET AL.: "Collaborative Clustering through Constrained Networks using Bandit Optimization", 2018 INTERNATIONAL JOINT CONFERENCE ON NEURAL NETWORKS (IJCNN), IEEE, 8 July 2018 (2018-07-08), pages 1 - 8, XP033419286, DOI: 10.1109/IJCNN.2018.8489479

- **S. SHEN ET AL.: "AUROR: Defending Against Poisoning Attacks in Collaborative Deep Learning Systems", PROCEEDINGS OF THE 32ND ANNUAL CONFERENCE ON COMPUTER SECURITY APPLICATIONS, 5 December 2016 (2016-12-05), pages 508 - 519, XP058306858, ISBN: 978-1-4503-4771-6, DOI: 10.1145/ 2991079.2991125**

- **L. WANG ET AL.: "CMFL: Mitigating Communication Overhead for Federated Learning", 2019 IEEE 39TH INTERNATIONAL CONFERENCE ON DISTRIBUTED COMPUTING SYSTEMS (ICDCS), IEEE, 7 July 2019 (2019-07-07), pages 954 - 964, XP033651779, DOI: 10.1109/ICDCS.2019.00099**

**Description**

TECHNICAL FIELD

Disclosed are embodiments related to federated learning using a moderator.

BACKGROUND

Machine learning is commonly used, including in a distributed environment. For example, in large-scale distributed cyber-physical systems, predictive models based on machine learning (e.g., neural networks, Bayesian networks, decision trees, and so on) can be built at distributed nodes using locally available data. Naturally, the reliability of model prediction relies on the statistical confidence of the model output. However, a local model in the distributed nodes may not have locally rich enough data to build reliable models, due to e.g., time resolution, the value to be predicted (the target) experiencing rapidly changing target distributions based on changing local data, or other data-mining related constraints such as storage cost. In such a case, there is a need to leverage decentralized learning methods, also known as federated learning, where a central common model maintained by a central node is built by combining the collected data from a set of distributed nodes.

The final goal of federated learning is to collect observations from multiple nodes in order to build a more reliable central model at the central node of the distributed environment. However, due to privacy constraints and communication cost, it is usually not possible to send the local data to the central model of the central node. Instead, in federated learning, local models are trained locally using local data and only the model parameters are shared with the central model of the central node. This can decrease communication cost, and also increase the amount of privacy that a local user retains. The central model of the central node may be updated, for example, by combining (e.g. averaging) the old and new model parameters to update the central model. The update central model may be shared with various users, including users who contributed local models. Such local models may also be updated based on the central model of the central node. In this manner, the effect of local data may be indirectly shared with other local models without compromising privacy and reducing the transmission of voluminous data.

SUMMARY

One problem in current federated learning systems arises when different local models in the distributed nodes are updated at different rates due to the different frequencies in which data arrives at the local models. If the updates to model parameters are sent to the central model without any moderation, there may be situations where the central model is biased towards specific local models. For example, cumulative updates from a single node could skew the global model such that it is over-trained with respect to the data from the single node, and performs poorly with data from other nodes. This could happen if the distribution of training data is not uniform across all the distributed nodes. Therefore, it is useful in embodiments described herein to moderate the updates to the central model.

When local models are updated by local data in the distributed nodes, and these updates are presented to the central model of the central node, the individual updates received from the distributed nodes may be checked for drastic changes, e.g. if an individual update would cause a certain reduction in accuracy (such as 5%), the update may be prevented from being applied to the central model. However, this does not prevent the situation where there are many small changes leading to a cumulatively large change that is biased towards specific models. For instance, after a series of small changes favoring a first node's local model, the global model could become over-fitted to the data collected by the first node, and might therefore experience degraded performance for other data such that e.g. a second node would perform worse after receiving the updated global model. Embodiments provide robust solutions to this problem. Rule-based algorithms which are typically used may not be able to fully capture the dynamic nature of the updates coming from different local models, embodiments employ machine learning techniques (including reinforcement learning) to moderate updates to the central model.

A technical paper by Muñoz-González et al ("Byzantine-Robust Federated Learning through Adaptive Model Averaging", 2019) describes an algorithm for federated learning that is designed to detect failures, attacks and bad updates provided by participants in a collaborative model. Bad or malicious local model updates are detected and discarded at each training iteration.

A technical paper by Arjun Nitin Bhagoji et al ("Analysing Federated Learning Through an Adversarial Lens", 2019) discloses methods by which a single, non-colluding malicious agent may conduct model poisoning attacks on a federated learning system.

In embodiments described herein, a moderator module may be employed. For example, in an embodiment a moderator module may be based on reinforcement learning that learns from a sequence of observations denoting the effect of updates on the accuracy of the central model (e.g. measuring accuracy against a fixed test set). The moderator module may be located between the local models and the central model, or it may be part of the central node that updates the central model. The moderator module queues updates coming from different models; selects one of the updates based on one or more criteria; and applies the selected update to the central model. For example, the selection may ensure that the number of updates are roughly uniform and the update times are within a specified interval. This can ensure updates from a given model or subset of models does not overwhelm the central model.

Advantages of disclosed embodiments include the following. Embodiments reduce bias for local models in the distributed nodes, due to differential frequency of updates, save computational power at the central node or server by processing fewer updates, and achieve faster communication between the central and local models.

According to a first aspect, a method according to claim 1.

In some embodiments, the selection criteria includes a rule that during any N updates to the central model, an accuracy of the central model is not reduced by more than a threshold amount (such as 5%) for more than M times where $M < N$.

In some embodiments, employing a CMAB algorithm comprises evaluating a cost function such that a cost of an action is computed using a current version of the central model and a test set.

According to a second aspect, a moderator node is provided according to claim 5.

According to a third aspect, a computer program is provided comprising instructions which when executed by processing circuitry causes the processing circuitry to perform the method of any one of the embodiments of the first aspect.

According to a fourth aspect a carrier is provided containing the computer program of the third aspect, wherein the carrier is one of an electronic signal, an optical signal, a radio signal, and a computer readable storage medium.

## BRIEF DESCRIPTION OF THE DRAWINGS

The accompanying drawings, which are incorporated herein and form part of the specification, illustrate various embodiments.

FIG. 1 illustrates a federated learning system according to an embodiment.
FIG. 2 illustrates a message diagram according to an embodiment.
FIG. 3 is a flow chart according to an embodiment.
FIG. 4 is a block diagram of an apparatus according to an embodiment.
FIG. 5 is a block diagram of an apparatus according to an embodiment.

## DETAILED DESCRIPTION

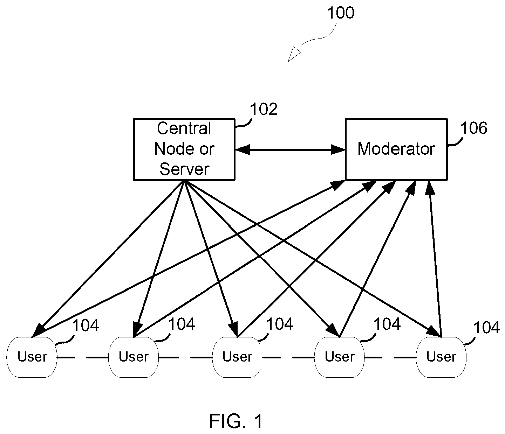

FIG. 1 illustrates federated learning system 100 according to an embodiment. As shown, a central node or server 102 is in communication with one or more users 104. Optionally, users 104 may be in communication with each other utilizing any of a variety of network topologies and/or network communication systems. For example, users 104 may include user devices such as a smart phone, tablet, laptop, personal computer, and so on, and may also be communicatively coupled through a common network such as the Internet (e.g., via WiFi) or a communications network (e.g., LTE or 5G). While a central node or server 102 is shown, the functionality of central node or server 102 may be distributed across multiple nodes and/or servers, and may be shared between one or more of users 104. Collectively, users 104 may form part of a distributed network of nodes, each such node having a local model, together with the central node or server 102 that maintains a global model.

Moderator 106 may sit between the central node or server 102 and the users 104. Moderator 106 may be a separate entity, or it may be part of central node or server 102. As shown, each user 104 may communicate model updates to moderator 106, moderator 106 may communicate with central node or server 102 (e.g. deciding which updates to apply), and central node or server 102 may send the updated central model to the users 104. Although the communication link between central node or server 102 and users 104, and the link between users 104 and moderator 106 is shown in one direction, communication may be bidirectional between those entities (e.g. with a two-way link, or through a different communication channel).

Federated learning as described in embodiments herein may involve one or more rounds, where a central model is iteratively trained in each round. Users 104 may register with the central node or server 102 to indicate their willingness to participate in the federated learning of the central model, and may do so continuously or on a rolling basis. Upon registration (and potentially at any time thereafter), the central node or server 102 may select a model type and/or model architecture for the local user 104 to train. The central node or server 102 may transmit an initial model to the users 104. For example, the central node or server 102 may transmit to the users 104 a central model (e.g., newly initialized or partially trained through previous rounds of federated learning). The users 104 may train their individual models locally with their own data. The results of such local training may then be reported back to central node or server 102, which may pool the results and update the global model. Reporting back to the central node or server 102 may be mediated by moderator 106, which may determine which updates to apply. This process may be repeated iteratively. Further, at each round of training the central model, central node or server 102 may select a subset of all registered users 104 (e.g., a random subset) to participate in the training round.

The three nodes are described in more detail below.

Local Nodes

Local nodes (e.g. users 104) maintain local models, which may in some embodiments be neural networks with identical architecture. Updates to local models happen according to the frequency of the data that are input to the respective model. Depending upon a user specified strategy, updates are sent to the central node or server 102, mediated by moderator 106. The updates may include the weights of the neural network. Generally, the local nodes may utilize any type of federated learning (and any type of local model consistent with that).

Central Node

The central node or server 102 maintains a central model. In some embodiments, the central model may have the same architecture as the local models. When the central node gets a set of updates from the local nodes 104, it combines the updates to the central model (e.g. by averaging the weight values of the updates and applying the averaged weight values to the central model). The average may be a "simple" or "weighted" average. The updated model may then be transmitted to the local nodes 104, which in turn may switch to the new updated model of the central node or server 102. Generally, the central node or server 102 may utilize any type of federated learning (and any type of central model consistent with that).

Moderator

The moderator 106 may act as an intelligent agent in (or coupled to) the central node or server 102 that intercepts the updates from the local nodes 104 and schedules them for being applied to update the central model. For example, moderator 106 may actively intercept updated from the local nodes 104 that are sent to the central node or server 102, mediating the updates to control which updates the central node or server 102 applies. Alternatively, or additionally, local nodes 104 may send updates directly to moderator 106, which then passes along updates to the central node or server 102 that are selected to be applied. For example, central node or server 102 may instruct local nodes 104 to send updates directly to moderator 106. Accordingly, moderator 106 may receive (e.g. directly or indirectly) updates from local nodes 104, and may control which updates are applied, and the order in which updates are applied to the central model by the central node or server 102. When such updates are received, moderator 106 may store the updates in one or more queues. For example, in one embodiment moderator 106 maintains a queue for each local node 104, and upon receiving an update from a particular local node 104 it enqueues that update in the queue corresponding to the local node 104.

The moderator 106 uses machine learning, such as by using reinforcement learning methods to learn how different updates impact the quality of the central model. The moderator 106 may accordingly schedules the local updates such that the quality of the central model satisfies one or more requirements (e.g., as specified by the central node or server 102, one or more users 104, or as otherwise specified).

In some embodiments, the quality of the central model may be measured as the accuracy against a test set compiled from a selection (e.g., a random selection) of samples from local nodes 104. In some embodiments, the test set may be updated at certain intervals. In other embodiments, the test set may be a fixed canonical test set. In some embodiments, the moderator 106 is responsible for constructing and maintaining the test set.

As a non-limiting example of the one or more requirements, consider the following requirement that the moderator 106 may enforce: during any N updates, the accuracy of the central model should not reduce by a certain threshold amount (e.g. by not more than 5%) for more than M times (M < N). The requirement allows for occasional dips in accuracy, but not too many such dips (where "too many" is specified by M in this requirement). Different and more complex requirements can also be specified, for example any sort of requirement that can be captured through a monitor (explained below).

Requirements may be specified based on different properties of the central model and the local models, including complex patterns on the evolution over time of such properties. The moderator 106 may compute a cost based on a history of updates and model properties; the cost computation may also involve the requirement specification.

In embodiments, requirements may be specified in a language that allows combining predicates on different model properties such as accuracy, norm (e.g., L2-norms) based on the model weights, and other model properties. For example, a requirement could include the predicate: (accuracy_c > 90) denoting the accuracy of central model "c" (e.g., relative to the test set) is more than 90%. A requirement could also include the predicate: (L2_ij < 0.01) denoting the L2-norm between the weights of local models M_i and M_j is less than 0.01. Other requirement predicates are possible.

Given a set of predicates (such as described above), more complex requirement specifications may be built, e.g. using finite linear-time temporal logic (LTL). Such requirement specifications may include boolean combination of predicates (e.g., AND, OR) and temporal formulae. Examples of temporal formulae include:

- "eventually_m $\alpha$" meaning that $\alpha$ will hold (or be true) within m steps (e.g. the accuracy will be > 90% within next m steps).

- "always_m $\alpha$" meaning that $\alpha$ must hold over m steps (e.g. the model parameter norm will never change more than 0.01% in a single step)

- "$\alpha$ U $\beta$" meaning $\alpha$ holds until $\beta$ holds (e.g. the accuracy of the central model does not change until there are local updates which can independently change the accuracy by 1%)

These, and other combinations of predicates using e.g. finite LTL, may be used to produce requirements that the moderator 106 enforces. Moreover, embodiments may include a set of requirements with respective weights.

Embodiments may include a monitor that is constructed to evaluate the base predicates. Such monitors may be used, also, for purposes of a cost function. For example, using a contextual multi-armed bandit process for moderating updates (as described herein), such a cost function may be used during the arm selection process. Each requirement (e.g., base predicates) may be evaluated, and may produce an average weight to be used as the cost function output.

Moderator 106 uses a contextual multi-armed bandit (CMAB) algorithm for selecting updates to apply to the central model. The CMAB algorithm is a specific example of reinforcement learning, and encompasses a class of different solutions. In the CMAB algorithm, an agent is presented with a context. In this context, the agent has to select one of K available actions without knowing the result of that action *a priori*. Once an action is selected, the agent knows the result (called a reward, which may be positive or negative). The goal of the agent is to maximize the aggregated reward.

Since the rewards for context and selected actions are not known *a priori,* and the rewards are usually from an unknown distribution, the agent needs to explore the policy space to find the right policy that will maximize the aggregated reward. A policy is defined as a mapping from a context to an action. However, there is a possibility for (potentially large) negative rewards while exploring, therefore there is a tension between exploration and exploitation (i.e. selecting from actions that have been already encountered).

Different types of CMAB algorithms may be employed by the moderator 106. In one embodiment, an *exp4* algorithm for policy learning may be used.

The general *exp4* algorithms, which are known in the art, are given here for reference:

**parameter:** $\epsilon \in (0, \frac{1}{2})$

Initialize the weights as $w_1(a) = 1$ for each arm *a*.

For each round *t:*

$$\text{Let } p_t(a) = \frac{w_t(a)}{\sum_{a'=1}^{K} w_t(a')}$$

Sample an arm $a_t$ from distribution $p_t(\cdot)$.

Observe cost $c_t(a)$ for each arm *a.*

For each arm *a,* update its weight $w_{t+1}(a) = w_t(a) \cdot (1 - \varepsilon)^{c_t(a)}$.

**Algorithm 5.2:** Hedge algorithm for online learning with experts

**Given:** set *E* of experts, parameter $\epsilon \in (0, \frac{1}{2})$ for Hedge, exploration parameter $\gamma \in [0, \frac{1}{2})$ .

In each round *t:*

1. Call Hedge, receive the probability distribution $p_t$ over $E$.

2. Draw an expert $et$ independently from $p_t$.

3. *Selection rule:* with probability $1 - \gamma$ follow expert $e_t$; else pick an arm $a_t$ uniformly at random.

4. Observe the cost $c_t(a_t)$ of the chosen arm.

5. Define fake costs for all experts $e$:

$$\hat{c}(\cdot) = \begin{cases} \dfrac{c_t(a_t)}{\Pr\left[a_t = a_{t,e}|\vec{p}_t\right]} \\ 0 \text{ otherwise.} \end{cases}$$

6. Return the "fake costs" $\hat{c}(\cdot)$ to Hedge

**Algorithm 6.2:** Algorithm Exp4 for adversarial bandits with expert advice

(See, for example, Introduction to Multi-Armed Bandits, Aleksandrs Slivkins, *available at* https://arxiv.org/pdf/1904.07272.pdf.)

The external computation required in Exp4 (and in Hedge, the sub-procedure) is to compute the cost of the selected action (i.e. the chosen arm).

For the moderator 106, when implementing the CMAB algorithm, the K arms of the CMAB paradigm correspond to the indices of the local nodes. A chosen arm indicates the local node whose update will be used to update the central model. The context of the CMAB paradigm corresponds to a set of K queues. When a local node 104 sends an update, the update is enqueued by the moderator 106 in the corresponding queue.

Cost computation: The cost of an action may be computed using the current central model and the test set. As described above, monitors may also be used to monitor the requirements. For example, a state machine may be employed that keeps a count of the number of "updates" and "dips". Consider the following cost function, which takes into account the example requirement above, i.e. during any N updates, the accuracy of the central model should not reduce by more than 5% for more than M times (M < N).

**Cost(Action a, Array[N] of accuracy results AcArray, K − number of dips in accuracy):**
    *//shift the window of N to the right*
    If there is a drop between $1^{st}$ and $2^{nd}$ element in AcArray then
      K := K − 1
    Drop the $1^{st}$ element in AcArray.
    Calculate the Accuracy of the current central model against the test set and append to AcArray
    If there is a dip between N-1 and N'th element then
      K := K + 1
    *//Return cost according to the violation of the requirement*
    If K > M then // requirement violated
      Return -1
    Else       // requirement is not yet violated
      Return 1

This example cost function returns only whether the requirement is violated or not violated. The array AcArray[] represents the last N updates; the state variable K is updated when a new action is added. For example, if there is a drop of more than 5% in accuracy between the first and second updates in the array, then K should be decremented by one (since the first result will no longer be within the last N updates). Then the accuracy is calculated for the given action, and the result is appended to AcArray. If that results in a drop of more than 5% in accuracy with the previous result, then K should be incremented by one. The check to see if the condition is required is simply whether the state variable K is greater than M (if so, it is violated, otherwise, not violated).

Other cost functions are possible. For example, some cost functions may return a weighted value instead of simply a "violated" or "not violated" result.

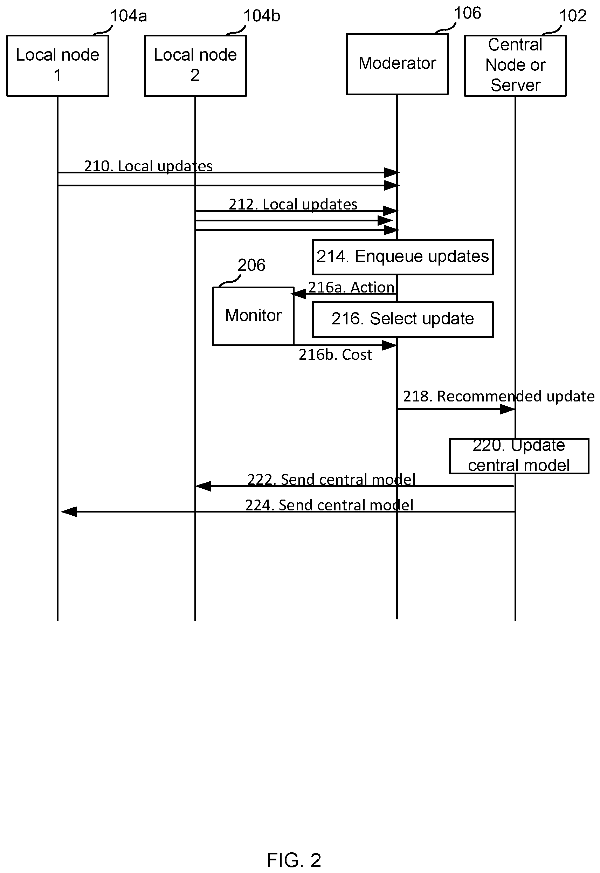

FIG. 2 illustrates a message flow diagram according to an embodiment. As shown, local nodes 1 and 2 (referred to as 104a and 104b, respectively) are in communication with central node or sever 102 and moderator 106.

In the illustrated sequence of steps, the system ensures that the requirements (e.g. on the central model accuracy or other properties) are maintained by the moderator 106 in a stochastic manner. Towards this, machine learning (e.g., reinforcement learning such as a CMAB algorithm) is used because the impact of the update actions are not known *a priori.* The moderator 106 may simultaneously learn the context and select actions through a CMAB algorithm. In this algorithm, there may be a state machine that monitors the requirements which moderator 106 must enforce, e.g. requirements related to quality of the central model, and emits a reward which is what the moderator agent optimizes. This state machine is referred to as monitor 206 in the diagram, and may be part of moderator 106.

Local nodes 104a and 104b send updates to the central node or server 102 according to the local strategies specified by user, at 210 and 212.

The moderator 106 receives or intercepts the updates and queues them in a multi-queue with one queue per local node 104a-b at 214.

The moderator 106 selects an update to apply at 216. For example, the moderator may employ the CMAB algorithm, e.g. using the Exp4 described above. The queue corresponds to the context and the number of local nodes correspond to the arms of the CMAB algorithm. During the execution of the algorithm, the moderator 106 may invoke the monitor 206, e.g. by sending it a proposed action at 216a and receiving a cost (or reward) for the action at 216b. Monitor 206 may evaluate the reward by dequeueing the update (from the corresponding queue), accessing the current central model from the central node or server 104, calculating the accuracy, and invoking the cost function.

Once moderator 106 selects an update to apply, moderator 106 may send (at 218) the recommended update to central node or server 104. In response, central node or server 104 may apply the update (at 220), and send the update (at 222 and 224) to local nodes 104a and 104b.

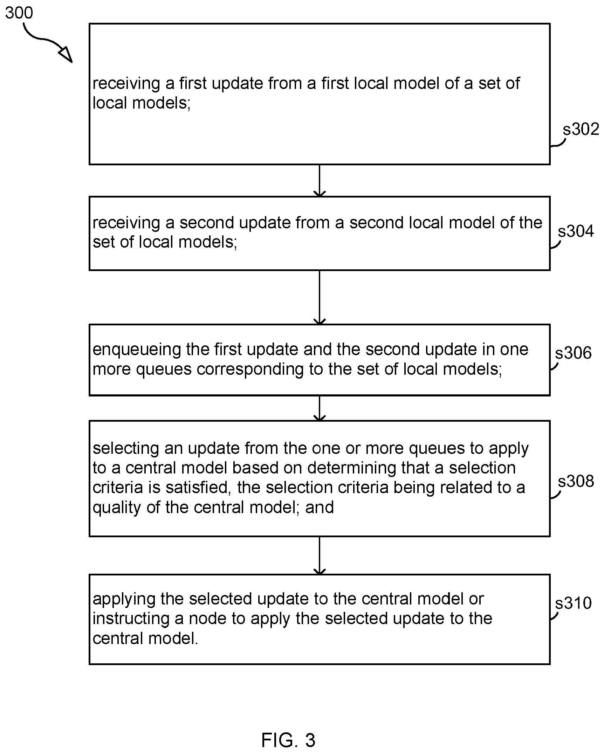

FIG. 3 illustrates a flow chart according to an embodiment. Process 300 is a method for training a central model in a federated learning system. Process 300 may begin with step s302.

Step s302 comprises receiving a first update from a first local model of a set of local models.

Step s304 comprises receiving a second update from a second local model of the set of local models.

Step s306 comprises enqueueing the first update and the second update in one more queues corresponding to the set of local models.

Step s308 comprises selecting an update from the one or more queues to apply to a central model based on determining that a selection criteria is satisfied, the selection criteria being related to a quality of the central model.

Step s310 comprises applying the selected update to the central model or instructing a node (such as central node or server 104) to apply the selected update to the central model.

In some embodiments, the selection criteria includes a rule that during any N updates to the central model, an accuracy of the central model is not changed by more than a threshold amount (e.g., not reduced by more than 5%) for more than M times where M < N. Selecting the update from the one or more queues to apply to the central model comprises employing reinforcement learning to determine which of the updates in the one or more queues to select. Employing reinforcement learning to determine which of the updates in the one or more queues to select comprises employing a contextual multi-arm bandit (CMAB) algorithm, such that a set of arms corresponds to the set of local models where a chosen arm indicates a local model whose update will be used to update the central model, and a context corresponds to the one or more queues, where the set of arms and the context constrain the CMAB algorithm.

In some embodiments, employing a CMAB algorithm comprises evaluating a cost function such that a cost of an action is computed using a current version of the central model and a test set. The method further includes dequeueing the selected update from the one or more queues corresponding to the set of local models; receiving additional updates from one or more of the models of the set of local models; enqueueing the additional updates in the one more queues corresponding to the set of local models; after dequeueing the selected update from the one or more queues corresponding to the set of local models, selecting another update from the one or more queues to apply to the central model based on determining that the selection criteria is satisfied, the selection criteria being related to a quality of the central model; and applying the another selected update to the central model or instructing the node to apply the another selected update to the central model.

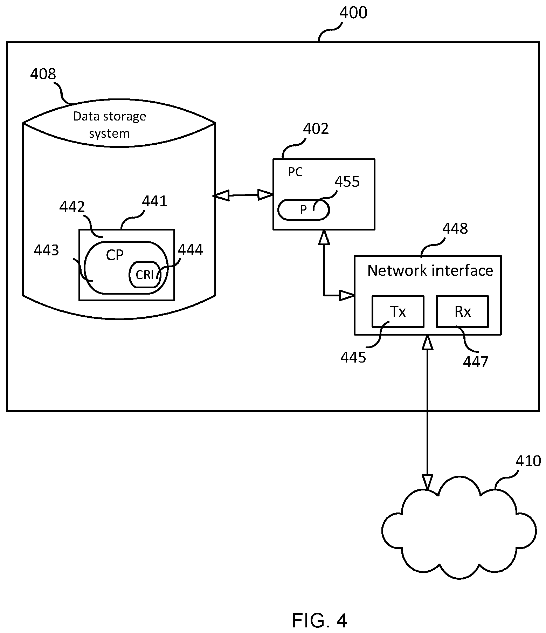

FIG. 4 is a block diagram of an apparatus 400 (e.g., a user 102 and/or central node or server 104 and/or moderator 106), according to some embodiments. As shown in FIG. 4, the apparatus may comprise: processing circuitry (PC) 402, which may include one or more processors (P) 455 (e.g., a general purpose microprocessor and/or one or more other processors, such as an application specific integrated circuit (ASIC), field-programmable gate arrays (FPGAs), and the like); a network interface 448 comprising a transmitter (Tx) 445 and a receiver (Rx) 447 for enabling the apparatus to transmit data to and receive data from other nodes connected to a network 410 (e.g., an Internet Protocol (IP) network) to which network interface 448 is connected; and a local storage unit (a.k.a., "data storage system") 408, which may include one or more non-volatile storage devices and/or one or more volatile storage devices. In embodiments where PC 402 includes a programmable processor, a computer program product (CPP) 441 may be provided. CPP 441 includes a computer readable medium (CRM) 442 storing a computer program (CP) 443 comprising computer readable instructions (CRI) 444. CRM 442 may be a non-transitory computer readable medium, such as, magnetic media (e.g., a hard disk), optical media, memory devices (e.g., random access memory, flash memory), and the like. In some embodiments, the CRI 444 of computer program 443 is configured such that when executed by PC 402, the CRI causes the apparatus to perform steps described herein (e.g., steps described herein with reference to the flow charts). In other embodiments, the apparatus may be configured to perform steps described herein without the need for code. That is, for example, PC 402 may consist merely of one or more ASICs. Hence, the features of the embodiments described herein may be implemented in hardware and/or software.

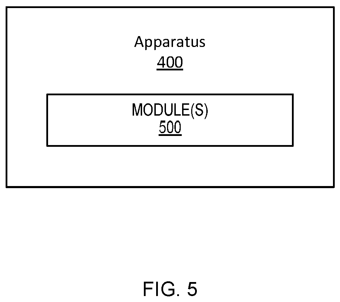

FIG. 5 is a schematic block diagram of the apparatus 400 according to some other embodiments. The apparatus 400 includes one or more modules 500, each of which is implemented in software. The module(s) 500 provide the functionality of apparatus 400 described herein (e.g., the steps herein, e.g., with respect to FIG. 3).

While various embodiments of the present disclosure are described herein, it should be understood that they have been presented by way of example only, and not limitation. Thus, the breadth and scope of the present disclosure should not be limited by any of the above-described exemplary embodiments.

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

**Claims**

1. A computer-implemented method (300) for training a central model in a federated learning system, the method comprising:

   receiving (s302) a first update from a first local model of a set of local models;
   receiving (s304) a second update from a second local model of the set of local models;
   enqueueing (s306) the first update and the second update in respective first and second queues of a plurality of queues corresponding to the set of local models;
   selecting (s308) an update from the plurality of queues to apply to a central model based on determining that a selection criteria is satisfied, the selection criteria being related to a quality of the central model, the selecting comprising employing a contextual multi-arm bandit, CMAB, algorithm, such that a set of arms corresponds to the set of local models where a chosen arm indicates a local model whose update will be used to update the central model, and a context corresponds to the plurality of queues, where the set of arms and the context constrain the CMAB algorithm;
   applying (s310) the selected update to the central model or instructing a node to apply the selected update to the central model;
   dequeueing the selected update from the plurality of queues corresponding to the set of local models;
   receiving additional updates from one or more of the models of the set of local models;
   enqueueing the additional updates in the plurality of queues corresponding to the set of local models;
   after dequeueing the selected update from the plurality of queues corresponding to the set of local models, selecting another update from the plurality of queues to apply to the central model based on determining that the selection criteria is satisfied, the selection criteria being related to a quality of the central model; and
   applying the another selected update to the central model or instructing the node to apply the another selected update to the central model.

2. The method of claim 1, wherein the selection criteria includes a condition that during any $N$ updates to the central model, an accuracy of the central model is not reduced by more than a threshold amount for more than $M$ times where $M < N$.

3. The method of claim 2, wherein the threshold amount is 5%.

4. The method of any one of claims 1-3, wherein employing a CMAB algorithm comprises evaluating a cost function such that a cost of an action is computed using a current version of the central model and a test set.

5. A moderator node (400) for training a central model in a federated learning system, the moderator node comprising:

a memory (408); and

a processor (402), wherein said processor is configured to:

receive a first update from a first local model of a set of local models;

receive a second update from a second local model of the set of local models;

enqueue the first update and the second update in respective first and second queues of a plurality of queues corresponding to the set of local models;

select an update from the plurality of queues to apply to a central model based on determining that a selection criteria is satisfied, the selection criteria being related to a quality of the central model, the selecting comprising employing a contextual multi-arm bandit, CMAB, algorithm, such that a set of arms corresponds to the set of local models where a chosen arm indicates a local model whose update will be used to update the central model, and a context corresponds to the plurality of queues, where the set of arms and the context constrain the CMAB algorithm;

apply the selected update to the central model or instruct a node to apply the selected update to the central model;

dequeue the selected update from the plurality of queues corresponding to the set of local models;

receive additional updates from one or more of the models of the set of local models;

enqueue the additional updates in the one more queues corresponding to the set of local models;

after dequeueing the selected update from the plurality of queues corresponding to the set of local models, select another update from the plurality of queues to apply to the central model based on determining that the selection criteria is satisfied, the selection criteria being related to a quality of the central model; and

apply the another selected update to the central model or instructing the node to apply the another selected update to the central model.

6. The moderator node of claim 5, wherein the selection criteria includes a condition that during any $N$ updates to the central model, an accuracy of the central model is not reduced by more than a threshold amount for more than $M$ times where $M < N$.

7. The moderator node of claim 6, wherein the threshold amount is 5%.

8. The moderator node of any one of claims 5-7, wherein employing a CMAB algorithm comprises evaluating a cost function such that a cost of an action is computed using a current version of the central model and a test set.

9. A computer program comprising instructions which when executed by processing circuitry causes the processing circuitry to perform the method of any one of claims 1-4.

10. A carrier containing the computer program of claim 9, wherein the carrier is one of an electronic signal, an optical signal, a radio signal, and a computer readable storage medium.

**Patentansprüche**

1. Computerimplementiertes Verfahren (300) zum Trainieren eines zentralen Modells in einem föderalen Lernsystem, wobei das Verfahren Folgendes umfasst:

Empfangen (s302) einer ersten Aktualisierung von einem ersten lokalen Modell eines Satzes lokaler Modelle;

Empfangen (s304) einer zweiten Aktualisierung von einem zweiten lokalen Modell des Satzes lokaler Modelle;

Einstellen (s306) der ersten Aktualisierung und der zweiten Aktualisierung in jeweilige erste und zweite Warteschlangen einer Vielzahl von Warteschlagen, die dem Satz lokaler Modelle entspricht;

Auswählen (s308) einer Aktualisierung aus der Vielzahl von Warteschlagen, die auf ein zentrales Modell anzuwenden ist, basierend auf einem Bestimmen, dass ein Auswahlkriterium erfüllt ist, wobei das Auswahlkriterium in Bezug zu einer Qualität des zentralen Modells steht, das Auswählen Einsetzen eines kontextuellen Multi-Arm-Bandit-Algorithmus, CMAB-Algorithmus, derart umfasst, dass ein Satz Arme dem Satz lokaler Modelle entspricht, wobei ein gewählter Arm ein lokales Modell anzeigt, dessen Aktualisierung dazu verwendet wird, das zentrale Modell zu aktualisieren, und ein Kontext der Vielzahl von Warteschlangen entspricht, wobei der Satz Arme und der Kontext den CMAB-Algorithmus einschränken;

Anwenden (s310) der ausgewählten Aktualisierung auf das zentrale Modell oder Anweisen eines Knotens, die ausgewählte Aktualisierung auf das zentrale Modell anzuwenden;

Entfernen der ausgewählten Aktualisierung aus der Vielzahl von Warteschlagen, die dem Satz lokaler Modelle entspricht;

Empfangen zusätzlicher Aktualisierungen von einem oder mehreren der Modelle des Satzes lokaler Modelle;

Einstellen der zusätzlichen Aktualisierungen in die Vielzahl von Warteschlagen, die dem Satz lokaler Modelle entspricht;

nach dem Entfernen der ausgewählten Aktualisierung aus der Vielzahl von Warteschlagen, die dem Satz lokaler Modelle entspricht, Auswählen einer anderen Aktualisierung aus der Vielzahl von Warteschlagen, die auf das zentrale Modell anzuwenden ist, basierend auf dem Bestimmen, dass das Auswahlkriterium erfüllt ist, wobei das Auswahlkriterium in Bezug zu einer Qualität des zentralen Modells steht; und

Anwenden der anderen ausgewählten Aktualisierung auf das zentrale Modell oder Anweisen des Knotens, die andere ausgewählte Aktualisierung auf das zentrale Modell anzuwenden.

2. Verfahren nach Anspruch 1, wobei das Auswahlkriterium eine Bedingung beinhaltet, dass während beliebiger $N$ Aktualisierungen des zentralen Modells eine Genauigkeit des zentralen Modells nicht für mehr als $M$ Male um mehr als eine Schwellwertmenge reduziert wird, wobei $M < N$.

3. Verfahren nach Anspruch 2, wobei die Schwellwertmenge 5 % beträgt.

4. Verfahren nach einem der Ansprüche 1-3, wobei das Einsetzen eines CMAB-Algorithmus Bewerten einer Kostenfunktion derart umfasst, dass Kosten einer Aktion unter Verwendung einer aktuellen Version des zentralen Modells und eines Testsatzes berechnet werden.

5. Moderatorknoten (400) zum Trainieren eines zentralen Modells in einem föderalen Lernsystem, wobei der Moderatorknoten Folgendes umfasst:

einen Speicher (408); und
einen Prozessor (402), wobei der Prozessor zu Folgendem konfiguriert ist:

Empfangen einer ersten Aktualisierung von einem ersten lokalen Modell eines Satzes lokaler Modelle;
Empfangen einer zweiten Aktualisierung von einem zweiten lokalen Modell des Satzes lokaler Modelle;
Einstellen der ersten Aktualisierung und der zweiten Aktualisierung in jeweilige erste und zweite Warteschlangen einer Vielzahl von Warteschlagen, die dem Satz lokaler Modelle entspricht;
Auswählen einer Aktualisierung aus der Vielzahl von Warteschlagen, die auf ein zentrales Modell anzuwenden ist, basierend auf einem Bestimmen, dass ein Auswahlkriterium erfüllt ist, wobei das Auswahlkriterium in Bezug zu einer Qualität des zentralen Modells steht, das Auswählen Einsetzen eines kontextuellen Multi-Arm-Bandit-Algorithmus, CMAB-Algorithmus, derart umfasst, dass ein Satz Arme dem Satz lokaler Modelle entspricht, wobei ein gewählter Arm ein lokales Modell anzeigt, dessen Aktualisierung dazu verwendet wird, das zentrale Modell zu aktualisieren, und ein Kontext der Vielzahl von Warteschlangen entspricht, wobei der Satz Arme und der Kontext den CMAB-Algorithmus einschränken;
Anwenden der ausgewählten Aktualisierung auf das zentrale Modell oder Anweisen eines Knotens, die ausgewählte Aktualisierung auf das zentrale Modell anzuwenden;
Entfernen der ausgewählten Aktualisierung aus der Vielzahl von Warteschlagen, die dem Satz lokaler Modelle entspricht;
Empfangen zusätzlicher Aktualisierungen von einem oder mehreren der Modelle des Satzes lokaler Modelle;
Einstellen der zusätzlichen Aktualisierungen in die eine oder die mehreren Warteschlagen, die dem Satz lokaler Modelle entsprechen;
nach dem Entfernen der ausgewählten Aktualisierung aus der Vielzahl von Warteschlagen, die dem Satz lokaler Modelle entspricht, Auswählen einer anderen Aktualisierung aus der Vielzahl von Warteschlagen, die auf das zentrale Modell anzuwenden ist, basierend auf dem Bestimmen, dass das Auswahlkriterium erfüllt ist, wobei das Auswahlkriterium in Bezug zu einer Qualität des zentralen Modells steht; und
Anwenden der anderen ausgewählten Aktualisierung auf das zentrale Modell oder Anweisen des Knotens, die andere ausgewählte Aktualisierung auf das zentrale Modell anzuwenden.

6. Moderatorknoten nach Anspruch 5, wobei das Auswahlkriterium eine Bedingung beinhaltet, dass während beliebiger N Aktualisierungen des zentralen Modells eine Genauigkeit des zentralen Modells nicht für mehr als M Male um mehr als eine Schwellwertmenge reduziert wird, wobei $M < N$.

**7.** Moderatorknoten nach Anspruch 6, wobei die Schwellwertmenge 5 % beträgt.

**8.** Moderatorknoten nach einem der Ansprüche 5-7, wobei das Einsetzen eines CMAB-Algorithmus Bewerten einer Kostenfunktion derart umfasst, dass Kosten einer Aktion unter Verwendung einer aktuellen Version des zentralen Modells und eines Testsatzes berechnet werden.

**9.** Computerprogramm, umfassend Anweisungen, die, wenn sie durch eine Verarbeitungsschaltung ausgeführt werden, die Verarbeitungsschaltung dazu veranlassen, das Verfahren nach einem der Ansprüche 1-4 durchzuführen.

**10.** Träger, enthaltend das Computerprogramm nach Anspruch 9, wobei der Träger eines von einem elektronischen Signal, einem optischen Signal, einem Funksignal und einem computerlesbaren Speichermedium ist.

**Revendications**

**1.** Procédé mis en œuvre par ordinateur (300) pour l'entraînement d'un modèle central dans un système d'apprentissage fédéré, le procédé comprenant :

la réception (s302) d'une première mise à jour provenant d'un premier modèle local d'un ensemble de modèles locaux ;

la réception (s304) d'une seconde mise à jour provenant d'un second modèle local de l'ensemble de modèles locaux ;

la mise en file d'attente (s306) de la première mise à jour et de la seconde mise à jour dans des première et seconde files d'attente respectives d'une pluralité de files d'attente correspondant à l'ensemble de modèles locaux ;

la sélection (s308) d'une mise à jour à partir de la pluralité de files d'attente à appliquer à un modèle central sur la base de la détermination qu'un critère de sélection est satisfait, le critère de sélection étant lié à une qualité du modèle central, la sélection comprenant l'emploi d'un algorithme de bandit manchot contextuel, CMAB, de sorte qu'un ensemble de bras corresponde à l'ensemble de modèles locaux où un bras choisi indique un modèle local dont la mise à jour sera utilisée pour mettre à jour le modèle central, et un contexte corresponde à la pluralité de files d'attente, où l'ensemble de bras et le contexte contraignent l'algorithme CMAB ;

l'application (s310) de la mise à jour sélectionnée au modèle central ou le fait d'ordonner à un nœud de réaliser l'application de la mise à jour sélectionnée au modèle central ;

le retrait de la file d'attente de la mise à jour sélectionnée à partir de la pluralité de files d'attente correspondant à l'ensemble de modèles locaux ;

la réception de mises à jour supplémentaires provenant d'un ou plusieurs des modèles de l'ensemble de modèles locaux ;

la mise en file d'attente des mises à jour supplémentaires dans la pluralité de files d'attente correspondant à l'ensemble de modèles locaux ;

après le retrait de la file d'attente de la mise à jour sélectionnée à partir de la pluralité de files d'attente correspondant à l'ensemble de modèles locaux, la sélection d'une autre mise à jour à partir de la pluralité de files d'attente à appliquer au modèle central sur la base de la détermination que le critère de sélection est satisfait, le critère de sélection étant lié à une qualité du modèle central ; et

l'application de l'autre mise à jour sélectionnée au modèle central ou le fait d'ordonner au nœud de réaliser l'application de l'autre mise à jour sélectionnée au modèle central.

**2.** Procédé selon la revendication 1, dans lequel le critère de sélection inclut une condition selon laquelle, lors de n'importe quelles N mises à jour du modèle central, une précision du modèle central n'est pas réduite de plus d'une quantité seuil pendant plus de M fois où $M < N$.

**3.** Procédé selon la revendication 2, dans lequel la quantité seuil est de 5 %.

**4.** Procédé selon l'une quelconque des revendications 1 à 3, dans lequel l'emploi d'un algorithme CMAB comprend l'évaluation d'une fonction de coût de sorte qu'un coût d'une action soit calculé en utilisant une version actuelle du modèle central et un ensemble de test.

**5.** Nœud modérateur (400) pour l'entraînement d'un modèle central dans un système d'apprentissage fédéré, le nœud modérateur comprenant :

une mémoire (408) ; et

un processeur (402), dans lequel ledit processeur est configuré pour :

recevoir une première mise à jour provenant d'un premier modèle local d'un ensemble de modèles locaux ;

recevoir une seconde mise à jour provenant d'un second modèle local de l'ensemble de modèles locaux ;

mettre en file d'attente la première mise à jour et la seconde mise à jour dans des première et seconde files d'attente respectives d'une pluralité de files d'attente correspondant à l'ensemble de modèles locaux ;

sélectionner une mise à jour à partir de la pluralité de files d'attente à appliquer à un modèle central sur la base de la détermination qu'un critère de sélection est satisfait, le critère de sélection étant lié à une qualité du modèle central, la sélection comprenant l'emploi d'un algorithme de bandit manchot contextuel, CMAB, de sorte qu'un ensemble de bras corresponde à l'ensemble de modèles locaux où un bras choisi indique un modèle local dont la mise à jour sera utilisée pour mettre à jour le modèle central, et un contexte corresponde à la pluralité de files d'attente, où l'ensemble de bras et le contexte contraignent l'algorithme CMAB ;

appliquer la mise à jour sélectionnée au modèle central ou ordonner à un nœud de réaliser l'application de la mise à jour sélectionnée au modèle central ;

retirer de la file d'attente la mise à jour sélectionnée à partir de la pluralité de files d'attente correspondant à l'ensemble de modèles locaux ;

recevoir des mises à jour supplémentaires provenant d'un ou plusieurs des modèles de l'ensemble de modèles locaux ;

mettre en file d'attente les mises à jour supplémentaires dans la pluralité de files d'attente correspondant à l'ensemble de modèles locaux ;

après le retrait de la file d'attente de la mise à jour sélectionnée à partir de la pluralité de files d'attente correspondant à l'ensemble de modèles locaux, sélectionner une autre mise à jour à partir de la pluralité de files d'attente à appliquer au modèle central sur la base de la détermination que le critère de sélection est satisfait, le critère de sélection étant lié à une qualité du modèle central ; et

appliquer l'autre mise à jour sélectionnée au modèle central ou ordonner au nœud de réaliser l'application de l'autre mise à jour sélectionnée au modèle central.

6. Nœud modérateur selon la revendication 5, dans lequel le critère de sélection inclut une condition selon laquelle, lors de n'importe quelles N mises à jour du modèle central, une précision du modèle central n'est pas réduite de plus d'une quantité seuil pendant plus de M fois où $M < N$.

7. Nœud modérateur selon la revendication 6, dans lequel la quantité seuil est de 5 %.

8. Nœud modérateur selon l'une quelconque des revendications 5 à 7, dans lequel l'emploi d'un algorithme CMAB comprend l'évaluation d'une fonction de coût de sorte qu'un coût d'une action soit calculé en utilisant une version actuelle du modèle central et un ensemble de test.

9. Programme informatique comprenant des instructions qui, lorsqu'elles sont exécutées par une circuiterie de traitement, amènent la circuiterie de traitement à réaliser le procédé selon l'une quelconque des revendications 1 à 4.

10. Support contenant le programme informatique selon la revendication 9, dans lequel le support est l'un parmi un signal électronique, un signal optique, un signal radio et un support de stockage lisible par ordinateur.

100

102

Central
Node or
Server

106

Moderator

104
104
104
104
104

User — User — User — User — User

FIG. 1

FIG. 2

300

receiving a first update from a first local model of a set of local models;

s302

receiving a second update from a second local model of the set of local models;

s304

enqueueing the first update and the second update in one more queues corresponding to the set of local models;

s306

selecting an update from the one or more queues to apply to a central model based on determining that a selection criteria is satisfied, the selection criteria being related to a quality of the central model; and

s308

applying the selected update to the central model or instructing a node to apply the selected update to the central model.

s310

FIG. 3

FIG. 4

Apparatus
400

MODULE(S)
500

FIG. 5

**REFERENCES CITED IN THE DESCRIPTION**

**Non-patent literature cited in the description**

- **MUÑOZ-GONZÁLEZ et al.** *Byzantine-Robust Federated Learning through Adaptive Model Averaging*, 2019

- **ARJUN NITIN BHAGOJI et al.** *Analysing Federated Learning Through an Adversarial Lens*, 2019